# FASCICULE DE BREVET EUROPEEN

(11) **EP 2 568 195 B1**
(45) Date de publication et mention de la délivrance du brevet: **20.01.2016**
(21) Numéro de dépôt: 12360059.5
(22) Date de dépôt: 03.08.2012
(51) Int. Cl.: F16G 1/28, F16G 3/00, F16G 3/02

(54) **Bande de matiere en boucle pourvue d'une jonction**
Bandschleifenmterial, das mit einem Anschluss ausgestattet ist
Loop web provided with a seam

(30) Priorité: 08.09.2011 FR 1157974
(43) Date de publication de la demande: 13.03.2013
(73) Titulaire: Tanals Société par actions simplifiées (SAS), 68290 Masevaux (FR)
(72) Inventeur: Frey, Pierre-Régis, 68460 Lutterbach (FR)
(74) Mandataire: Koelbel, Caroline

(56) Documents cités:
- EP-A2- 2 108 860
- WO-A1-2009/040628
- WO-A2-2007/090148
- JP-A- 11 311 300

## Description

### Domaine technique:

La présente invention concerne une bande de matière en boucle, telle que notamment une courroie de transmission de puissance, une bande transporteuse, un convoyeur ou similaire, comportant au moins un ruban plat présentant au moins une zone de jonction réversible permettant le montage et le démontage de ladite bande de matière en boucle, ladite zone de jonction réversible comportant au moins deux dentelures emboîtables de formes complémentaires prévues chacune dans le plan d'une extrémité dudit ruban plat, lesdites dentelures comportant chacune au moins une dent délimitée par un pourtour et étant agencées pour être traversées, après leur emboîtement, par au moins une tige transversale amovible permettant de verrouiller et de déverrouiller ladite zone de jonction.

### Technique antérieure :

De nombreux domaines de l'industrie mettent en oeuvre des bandes de matière en boucle, que ce soit en tant qu'élément de transmission de puissance tel qu'une courroie ou en tant qu'élément de transport tel qu'une bande transporteuse, un convoyeur, etc. Ces bandes de matière présentent, de manière classique, une structure et des caractéristiques techniques spécifiquement adaptées en fonction de l'application visée.

Les courroies de transmission de puissance sont classiquement réalisées à partir de matériaux conçus pour améliorer leur durée de vie eh fatigue et résister à l'ensemble des contraintes mécaniques, physiques et/ou chimiques auxquelles elles sont couramment soumises en cours d'utilisation. Parmi les courroies de transmission de puissance disponibles sur le marché à l'heure actuelle, celles commercialisées sous le nom PolyChain® et réalisées en un composé de polyuréthane léger et robuste se démarquent par leurs excellentes performances mécaniques et leur très grande résistance à la fatigue. De telles courroies de transmission sont notamment quatre fois plus résistantes que les courroies traditionnelles car elles sont renforcées au moyen de câbles de traction souples spiralés, par exemple en carbone ou en Kevlar®, noyés dans leur épaisseur. Elles se présentent sous la forme de manchons sans fin, fabriqués sous presse dans un moule dont le diamètre en détermine la longueur, ces manchons étant coupés ou détaillés en fonction de la largeur souhaitée de chaque courroie. Du fait d'une telle structure sans fin, sans zone de jonction, de telles courroies de transmission voient avantageusement leurs propriétés de résistance mécanique préservées. Toutefois, elles ont l'inconvénient de nécessiter aussi bien pour leur installation sur une machine, que pour leur retrait en vue de leur remplacement, un démontage de la machine, voire l'intervention du fabricant de la machine, imposant un arrêt de la machine préjudiciable sur la rentabilité de l'outil de production. A l'heure actuelle, les opérations de manutention de telles courroies de transmission, qu'elles soient de type PolyChain® ou de tout autre type, se présentant sous la forme de manchons sans fin, se révèlent par conséquent particulièrement laborieuses, chronophages, et coûteuses.

Les solutions de jonctions réversibles couramment mises en oeuvre dans le domaine des bandes transporteuses et décrites dans un certain nombre de publications ne se révèlent pas totalement satisfaisantes lorsqu'elles sont transposées en tant que telles aux courroies de transmission de puissance, telles que celles précédemment décrites, qui supposent, comme évoqué, une structure apte à résister à des contraintes mécaniques, dues notamment aux forts couples de puissance à transmettre et à une vitesse de rotation élevée, qui sont nettement supérieures à celles rencontrées dans le domaine du transport.

Ainsi, la publication EP 2 108 860, se rapportant à une bande de matière en boucle destinée à être utilisée en tant que bande transporteuse, prévoit d'équiper ladite bande d'une zone de jonction comportant deux dentelures emboîtables, obtenues par estampage, et dans lesquelles les dents sont délimitées par un pourtour rectangulaire et présentent des longueurs différentes de sorte que les extrémités des dents sont décalées longitudinalement les unes par rapport aux autres. L'inconvénient majeur de cette solution, lorsqu'elle est mise en oeuvre dans le cadre d'une courroie de transmission de puissance, est du au fait que la forme proposée pour lesdites dents présente des angles vifs. En effet, bien qu'une telle caractéristique soit tout à fait adaptée dans le cas d'une bande transporteuse, classiquement réalisée à partir d'un matériau tel que du polyuréthane extrudé renforcé par des câbles de traction longitudinaux en acier, il apparaît que la présence de tout angle vif diminue fortement la durée de vie d'une courroie de transmission, notamment du type PolyChain®, fabriquée à partir de polyuréthane comparativement plus dur et dont les câbles de traction spiralés sont plus souples. En outre, une zone de jonction dans laquelle les extrémités des dents présentent un décalage longitudinal nécessite également davantage de tiges de verrouillage, ce qui rend le montage d'une telle jonction moins aisé. De plus, le polyuréthane utilisé dans le cadre d'une courroie de transmission de puissance de type PolyChain® est tellement dur que les outillages d'estampage classiques s'usent très rapidement et se déforment, ne permettant pas de reproduire avec suffisamment de précision les formes complémentaires des dentelures de la zone de jonction, pénalisant ainsi la résistance mécanique de la jonction.

Une autre solution, décrite dans la publication US 3,744,095, prévoit d'équiper les extrémités d'une courroie de transmission comportant des câbles de traction longitudinaux, de dentelures en forme de créneaux destinées à être assemblées au moyen de tiges de verrouillage filetées. L'inconvénient d'une telle découpe en créneaux réside non seulement dans la présence d'angles vifs au niveau des dentelures, mais également dans le fait que les câbles sont tous sectionnés à la même hauteur, de façon alignée sur toute la largeur de la courroie, dont la fatigue est alors fortement favorisée. Bien que la forme des dentelures en créneaux proposée par cette publication soit adaptée dans le cas de câbles longitudinaux, elle ne peut être transposée à une courroie de transmission de puissance, notamment du type PolyChain®, dans laquelle les câbles sont spiralés. En effet, les découpes parallèles aux bords longitudinaux de la courroie effectuées lors de l'estampage des dentelures, impliquent de sectionner longitudinalement au moins un câble spiralé, ce qui a pour conséquence de réduire la durée de vie en fatigue de ladite courroie dans la zone de jonction.

Un autre example est décrit dans la publication JP11311300 Explosé de l'invention :

La présente invention vise à pallier ces inconvénients en proposant une bande de matière en boucle présentant au moins une zone de jonction réversible agencée pour permettre son assemblage et son démontage sur site et pour préserver les propriétés de résistance mécanique et de durée de vie en fatigue de la bande de matière en boucle, de sorte que celle-ci rivalise en termes de résistance avec n'importe quelle autre bande de matière sans jonction et soit adaptée pour un usage aussi bien en tant que courroie de transmission de puissance qu'en tant que convoyeur ou similaire. Un autre but de l'invention est de proposer une bande de matière en boucle comportant au moins une zone de jonction dont la fabrication est optimisée, ne provoque pas une détérioration prématurée de l'outillage et conduit à des dentelures présentant une forme d'une parfaite précision.

Dans ce but, l'invention concerne une bande de matière en boucle du genre indiqué en préambule, caractérisée en ce qu'elle comporte au moins deux zones de jonction dans lesquelles lesdites dentelures s'étendent sur une partie seulement de sa largeur de sorte que, lorsque ladite bande de matière est assemblée en boucle autour de deux poulies, les brins de ladite bande qui s'étendent respectivement entre les deux poulies sont continus et sans jonction sur au moins une portion de leur largeur quelque soit la position en rotation de ladite bande de matière en boucle.

Dans une première variante de réalisation, les dentelures d'une première zone de jonction sont décalées latéralement et longitudinalement par rapport aux dentelures de la seconde zone de jonction de sorte que, lorsque ladite bande de matière est assemblée en boucle, lesdites première et seconde zones de jonction sont diamétralement opposées.

Dans cette variante, ladite bande de matière peut comporter un ruban plat pourvu desdites première et seconde zones de jonction qui s'étendent chacune sur une partie de la largeur dudit ruban plat.

Ladite bande de matière peut également comporter un premier ruban plat pourvu de ladite première zone de jonction et un second ruban plat pourvu de ladite seconde zone de jonction, lesdits premier et second rubans plats étant disposés côte à côte et de manière telle, l'un par rapport à l'autre, que lorsque lesdites extrémités desdits premier et second rubans plats sont assemblées, lesdites première et seconde zones de jonction sont diamétralement opposées.

Dans une deuxième variante de réalisation, ladite bande de matière comporte un ruban plat pourvu de deux zones de jonction qui s'étendent chacune sur une largeur inférieure à la moitié de la largeur dudit ruban plat, les dentelures d'une première zone de jonction étant décalées latéralement par rapport aux dentelures de la seconde zone de jonction de sorte que, lorsque ladite bande de matière est assemblée en boucle, lesdites première et seconde zones de jonction sont alignées dans la largeur de ladite bande de matière et délimitent entre elles une portion centrale continue et sans jonction.

Dans une troisième variante de réalisation, ladite bande de matière comporte un ruban plat pourvu de trois zones de jonction s'étendant chacune sur une largeur inférieure au tiers de la moitié de la largeur dudit ruban plat, les dentelures desdites zones de jonction étant décalées latéralement et disposées en chevron de sorte que, lorsque ladite bande de matière est assemblée en boucle, les trois zones de jonction sont alignées dans la largeur de ladite bande de matière, sont symétriques par rapport à l'axe médian dudit ruban plat et délimitent entre elles deux portions intermédiaires continues et sans jonction.

Les dentelures desdites zones de jonction comportent au moins une dent, ladite dent étant délimitée par un pourtour de forme asymétrique par rapport à l'axe longitudinal de ladite dent parallèle à l'axe médian dudit ruban plat.

Selon une variante de réalisation, le pourtour de ladite dent comporte au moins une portion de droite sensiblement parallèle aux bords longitudinaux dudit ruban plat.

Conformément à une autre variante de réalisation, le pourtour de ladite dent présente sensiblement une forme de triangle rectangle dont le sommet est arrondi,

La présente invention se caractérise également en ce que ledit pourtour de ladite dent comporte au moins un épaulement dont les angles sont arrondis.

Par ailleurs, si les dentelures desdites zones de jonction comportent plusieurs dents, les dents d'une même zone de jonction peuvent être alignées et de longueur égale.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels :
- les figures 1 et 2 représentent des vues en perspective d'une zone de jonction dans deux bandes de matière en boucle de différentes largeurs comportant des dents conformes à un exemple,
- les figures 3 et 4 représentent des vues en perspective d'une zone de jonction dans deux bandes de matière en boucle de différentes largeurs comportant des dents conformes à deux autres exemples.
- la figure 5 représente une vue en perspective de la bande de matière illustrée à la figure 4 avant l'assemblage de la zone de jonction,
- la figure 6 représente une vue de dessus d'un ruban plat agencé pour former la bande de matière en boucle représentée à la figure 7 comportant deux zones de jonction diamétralement opposées,
- la figure 8 représente une variante de réalisation de la bande de matière en boucle illustrée à la figure 7,
- la figure 9 représente une vue de dessus d'un ruban plat selon une autre forme de réalisation, agencé pour former la bande de matière en boucle représentée à la figure 10 comportant deux zones de jonction alignées, et
- la figure 11 représente une vue de dessus d'un ruban plat selon encore une autre forme de réalisation, agencé pour former la bande de matière en boucle représentée à la figure 12 comportant trois zones de jonction alignées en chevron.

### Illustrations de l'invention et différentes manières de la réaliser :

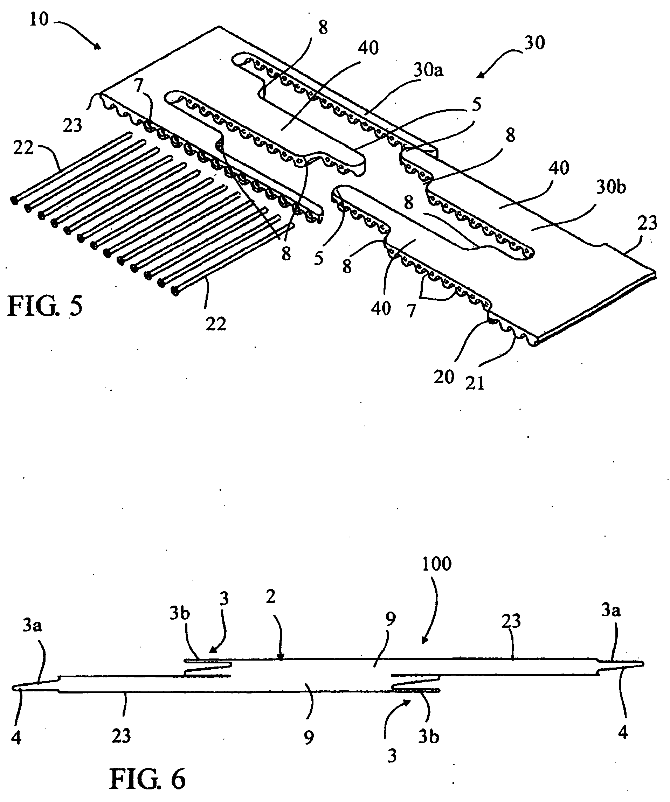

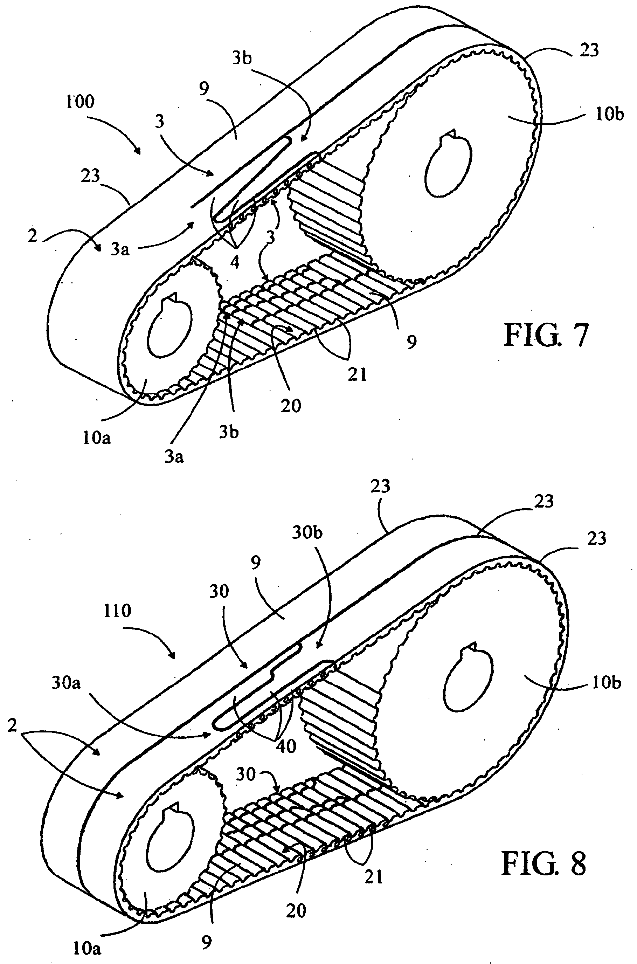

En référence aux figures 6-12, la présente invention concerne une bande de matière en boucle 100, 110, 120, 130 comportant au moins un ruban plat 2 réalisé, dans les exemples illustrés, en un matériau tel que le polyuréthane ou du type néoprène® ou similaire. Un tel matériau présente avantageusement les caractéristiques mécaniques requises pour résister aux contraintes auxquelles une bande de matière 100, 110, 120, 130 est soumise, qu'elle soit utilisée en tant que bande transporteuse ou en tant que courroie de transmission de puissance. Dans les exemples illustrés, le ruban plat 2 présente sur sa face inférieure 20 une surface équipée de crans 21 agencés pour coopérer avec des poulies crantées 10a, 10b (cf. fig. 7 et 8). Elle comporte en outre une âme de traction constituée d'une pluralité de câbles spiralés (non représentés) noyés dans son épaisseur, réalisés par exemple en carbone, en acier, en acier inoxydable, en fibre de verre, ou en Kevlar®, disposés parallèlement les uns par rapport aux autres et de manière inclinée par rapport aux bords longitudinaux 23 dudit ruban plat 2. Bien entendu, l'invention s'applique également à une bande de matière 2 crantée ou non, dans laquelle le ruban plat 2 est réalisé en un matériau différent de ceux indiqués précédemment, tel que par exemple du polyuréthane thermoplastique, ou tout autre matériau équivalent synthétique et/ou composite. De même, les câbles noyés dans le ruban plat 2 peuvent également être réalisés en un matériau tel que par exemple l'acier, la fibre de verre ou tout autre matériau équivalent et peuvent s'étendre parallèlement entre eux et aux bords longitudinaux 23 dudit ruban plat 2. Enfin, une telle bande de matière 2 pourrait également comporter une âme de traction textile et/ou une structure externe textile.

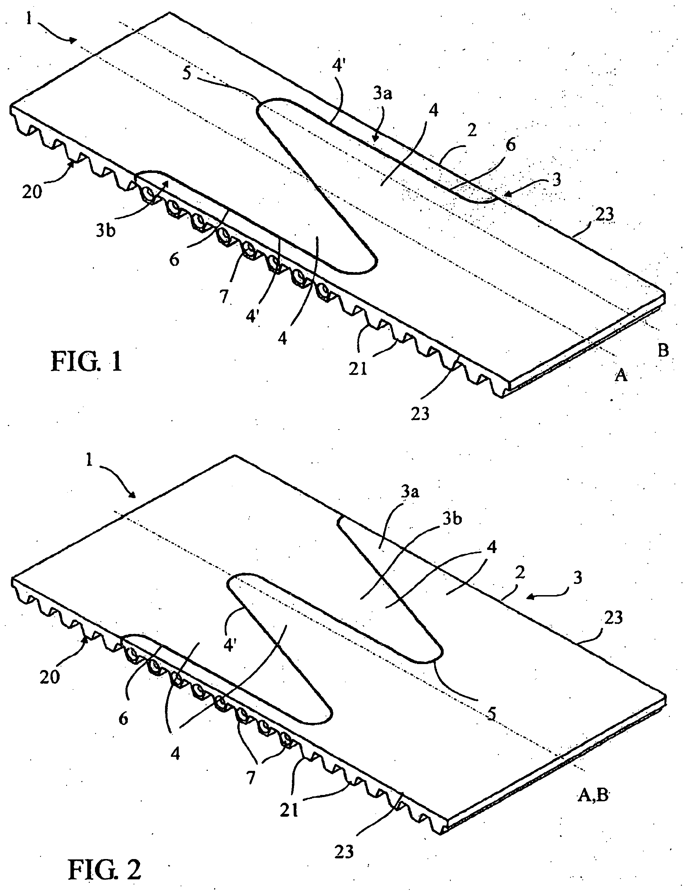

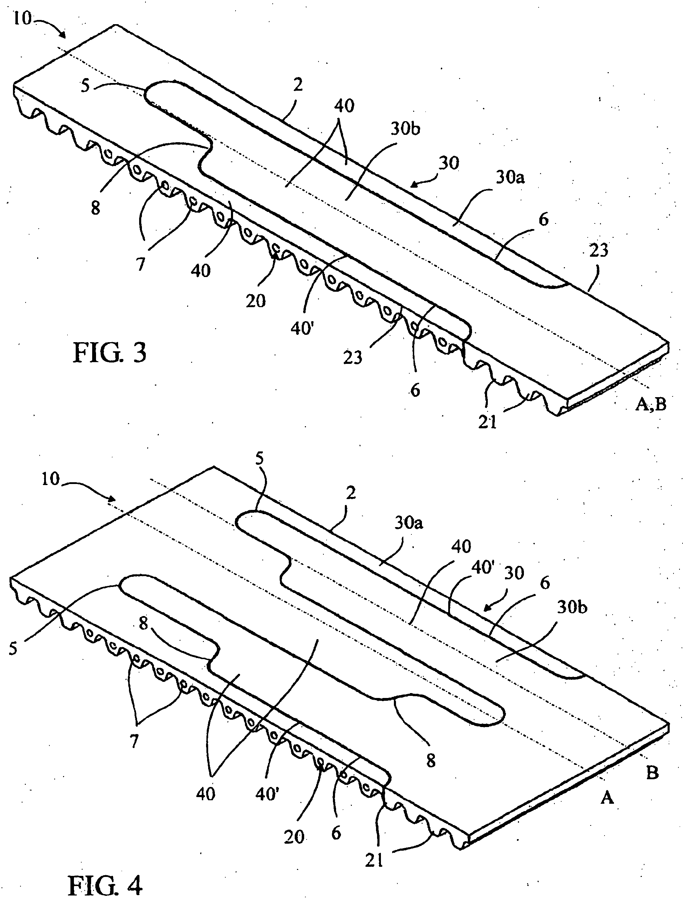

De manière classique, le ruban plat 2 présente au moins une zone de jonction réversible 3, 30 permettant le montage et le démontage de ladite bande de matière en boucle 100, 110, 120, 130 sur site. Cette zone de jonction 3, 30 comporte au moins deux dentelures emboîtables 3a, 3b, 30a, 30b, de formes complémentaires, formées chacune, par exemple par estampage ou tout autre procédé équivalent, dans le plan des extrémités dudit ruban plat 2. Ces dentelures 3a, 3b, 30a, 30b comportent des passages transversaux 7, réalisés par exemple sous la forme d'alésages lisses, agencés pour être traversés chacun, après l'emboîtement des dentelures 3a, 3b, 30a, 30b, par une tige transversale amovible 22 (cf. fig. 5) permettant de verrouiller et de déverrouiller la zone de jonction 3, 30. Par ailleurs, les dentelures 3a, 3b, 30a, 30b comportent chacune au moins une dent 4, 40, délimitée par un pourtour 4', 40' dont les angles sont de préférence arrondis. Le nombre de dents 4, 40 que comporte une dentelure 3a, 3b, 30a, 30b est notamment déterminé par la largeur du ruban plat 2. Les dentelures 3a, 3b, 30a, 30b illustrées aux figures 2 et 4 comportent davantage de dents 4, 40 que celles illustrées aux figures 1 et 3, formées sur un ruban plat 2 plus étroit. Si les dentelures comportent plusieurs dents, ces dents 4, 40 sont de préférence alignées et de même longueur.

Conformément à l'invention, et tel qu'illustré aux figures 6 à 12, le pourtour 4', 40' des dents 4, 40 présentent une forme asymétrique par rapport à l'axe longitudinal B de chaque dent parallèle à l'axe médian A du ruban plat 2, cette forme pouvant être décliné selon différentes variantes de réalisation en fonction de l'application finale de la bande de matière en boucle 1, et des caractéristiques physiques du ruban plat 2 souhaitées. Une telle forme asymétrique des dents 4, 40 permet avantageusement d'optimiser la découpe des dents dans la largeur du ruban plat 2, et de faciliter ultérieurement le perçage des passages transversaux 7 au moyen d'un outillage classique.

Dans l'exemple illustré aux figures 1 et 2, les dentelures 3a, 3b de la zone de jonction 3 s'étendent sur l'ensemble de la largeur du ruban plat 2, tandis que les dents 4 présentent sensiblement une forme de triangle rectangle dont le sommet 5 est arrondi, et dont un côté 6 est parallèle aux bords longitudinaux 23 du ruban plat 2. L'estampage des extrémités du ruban plat 2 en vue de réaliser des dentelures 3a, 3b dont les dents 4 présentent une telle forme triangulaire, conduit avantageusement à sectionner à différentes longueurs les câbles de traction, disposés dans l'épaisseur du ruban plat 2 de manière inclinée par rapport aux bords longitudinaux 23 de ce dernier. Ainsi, les extrémités libres des câbles de traction, s'étendant dans les dents 4, ne sont pas alignées les unes par rapport aux autres. Une telle caractéristique contribue à améliorer la durée de vie en fatigue de la bande de matière en boucle 1 par diminution du point faible et du point de rupture de rigidité en flexion situé en limite de la zone de jonction 3. D'autre part, une forme triangulaire permet une meilleure éjection du ruban plat 2 après l'étape d'estampage de ses extrémités en vue de fabriquer les dentelures 3a, 3b. Ceci permet d'améliorer la précision de découpe des deux dentelures 3a, 3b, et de garantir le respect de leurs formes complémentaires tout en limitant la déformation des outils d'estampage.

Par ailleurs, du fait que le sommet 5 des dents 4 est arrondi, les dentelures 3a, 3b ne présentent aucun angle vif, ce qui contribue également à améliorer la durée de vie en fatigue de la bande de matière en boucle 1. Ceci se vérifie particulièrement dans les variantes de réalisation telles que celles illustrées, dans lesquelles le ruban plat 2 est constitué d'un polyuréthane très dur tandis que les câbles de traction, réalisés en carbone ou Kevlar® sont souples, de tels matériaux étant particulièrement adaptés à une utilisation de la bande de matière en boucle 1 en tant que courroie de transmission de puissance.

L'exemple illustré à la figure 3 convient plus particulièrement à une bande de matière 1 obtenue à partir d'un ruban plat 2 présentant une largeur tellement faible que les dentelures 30a, 30b de la zone de jonction 30 ne peuvent guère comporter plus d'une dent 40. Dans ce cas, une dent de forme triangulaire est difficilement réalisable par estampage. Ainsi, afin de garantir qu'après l'étape d'estampage des extrémités du ruban plat 2, les câbles de traction soient sectionnés à différentes longueurs et leurs extrémités libres ne soient pas alignées les unes par rapport aux autres, la présente invention prévoit de conférer à la dent 40 d'une des dentelures 30b une forme générale allongée dans laquelle son pourtour 40' comporte un sommet arrondi 5 et au moins un épaulement 8. Dans ce cas, l'autre dentelure 30a comporte deux demi-dents 40 réparties de chaque côté de la dent 40 de la dentelure 30b. Bien entendu, une telle forme de dent 40 est également adaptée dans le cadre d'un ruban plat 2 de largeur plus importante (cf. fig. 4 et 5). Dans ce cas, les dentelures 30a, 30b de la zone de jonction 30 peuvent comporter des dents 40 à un épaulement 8 ou plusieurs épaulements 8, ces épaulements 8 étant de préférence décalés pour chaque dent 40 afin d'éviter de couper tous les câbles de traction à la même hauteur et prévenir ainsi toute rupture de rigidité trop importante. Comme dans l'exemple précédent, une telle forme de dent 40 comportant au moins un épaulement 8 permet également une meilleure éjection du ruban plat 2, après l'étape d'estampage de ses extrémités en vue de fabriquer les dentelures 30a, 30b. Les avantages définis par l'amélioration de la précision de découpe des deux dentelures 30a, 30b, le respect de leurs formes complémentaires et la préservation des outils d'estampage se manifestent par conséquent également dans le cadre de ces variantes de réalisation. Bien entendu, ces exemples de forme de dents ne sont pas limitatifs et s'étendent à toute autre forme asymétrique permettant d'atteindre les mêmes objectifs techniques.

Les zones de jonction 3, 30 des variantes de réalisation illustrées aux figures 1 à 5 peuvent être verrouillées et déverrouillées au moyen de tiges transversales 22 (cf. fig. 5) introduites de manière réversible dans les passages transversaux 7. En fonction des applications de la bande de matière en boucle 1, lesdites tiges transversales 22 peuvent être introduites dans lesdits passages transversaux 7 toutes depuis un seul des bords longitudinaux 23 du ruban plat 2 ou certaines depuis un desdits bords longitudinaux 23 et d'autres depuis l'autre bord longitudinal 23. Dans ce dernier cas, et dans l'hypothèse où les tiges de verrouillage 22 sont toutes suffisamment longues pour s'étendre à travers l'ensemble de la largeur du ruban plat 2, leur introduction depuis les deux bords longitudinaux 23 permet de limiter l'ouverture des dents 4, 40 et par conséquent d'augmenter la résistance mécanique de la zone de jonction 3, 30.

Par ailleurs, les tiges transversales 22 peuvent être constituées de vis standards, par exemple de type auto-taraudeuses, pourvues de têtes standards logées dans un premier alésage prévu dans le flanc de ladite bande de matière 2, pour être accessibles par un outil muni d'un embout de vissage standard et éviter d'endommager les poulies 10a, 10b. Un assemblage de type vis-écrou, permettant de pallier toute ouverture intempestive de la zone de jonction 3, 30 est également envisageable, l'écrou étant situé dans un second alésage prévu dans le flanc opposé de ladite bande de matière 2.

La figure 6 illustre un ruban plat 2 comportant deux zones de jonction 3, selon la forme de réalisation illustrée aux figures 1 et 2 par exemple, ou toute autre forme de jonction équivalente telle que celle illustrée aux figures 3 à 5. Les deux zones de jonction 3 sont décalées latéralement et longitudinalement l'une par rapport à l'autre, et les dentelures 3a, 3b de chaque zone de jonction 3 s'étendent sur une partie seulement de la largeur dudit ruban plat 2, par exemple sur la moitié de ladite largeur.

Un tel ruban plat 2 permet d'obtenir une bande de matière en boucle 100 telle qu'illustrée à la figure 7 comportant deux zones de jonction 3 diamétralement opposées. Grâce à cette construction spécifique, lorsque la bande de matière 100 est assemblée en boucle autour de deux poulies 10a, 10b selon la figure 7, les brins de cette bande qui s'étendent respectivement entre les deux poulies 10a, 10b, à savoir un brin tendu et un brin mou, sont continus et sans jonction sur au moins une portion 9 de leur largeur, quelque soit la position en rotation de la bande de matière 100 en boucle. Les zones de jonction 3 sont ainsi moins chargées et fatiguent beaucoup moins, ce qui permet de prolonger la durée de vie de la bande de matière 100 ou du moins de ne pas pénaliser cette durée de vie. Cette solution permet de rivaliser en termes de résistance avec toutes les courroies de transmission continue sans jonction.

Un résultat équivalent et plus simple à réaliser peut être atteint au moyen d'une bande de matière 110 représentée à la figure 8 comportant deux rubans plans 2, à savoir un premier ruban plat 2 équipé d'une première zone de jonction 30 et un second ruban plat 2 équipé d'une seconde zone de jonction 30. Chaque zone de jonction 30 peut correspondre à la forme de réalisation représentée aux figures 3 à 5, ou à toute autre forme de jonction équivalente telle que celle illustrée aux figures 1 et 2, et s'étend sur la largeur du ruban plat 2 concerné. Dans ce cas, les premier et second rubans plats 2 sont disposés côte à côte le long de leur bord longitudinal 23 commun, et de manière telle, l'un par rapport à l'autre, que lorsque lesdites extrémités desdits premier et second rubans plats 2 sont assemblées, lesdites première et seconde zones de jonction 30 sont diamétralement opposées. Comme dans l'exemple précédent, lorsque la bande de matière 110 est assemblée en boucle autour de deux poulies 10a, 10b, les brins de cette bande qui s'étendent respectivement entre les deux poulies 10a, 10b sont continus et sans jonction sur au moins une portion 9 de leur largeur, quelque soit la position en rotation de la bande de matière 110 en boucle.

Les réalisations selon les figures 7 et 8, qui comportent une zone de jonction 3, 30 dans chacun des brins de la bande de matière 100, 110 en boucle, nécessitent d'avoir accès à ces deux brins. Or sur certaines installations, le montage de ces bandes de matière 100, 110 n'est pas possible.

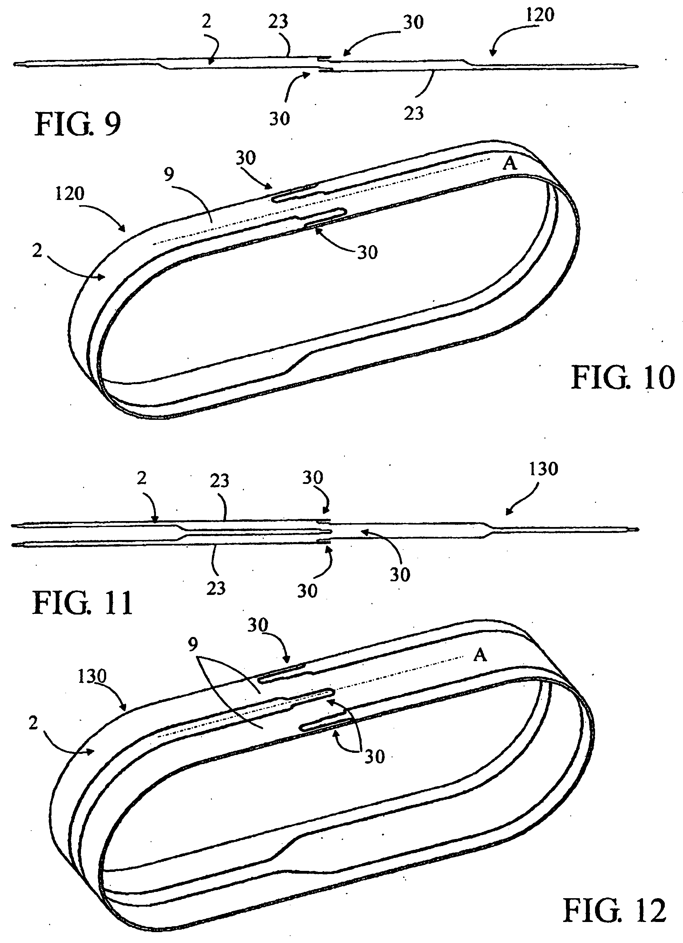

Pour combler ce manque, les figures 9 à 12 illustrent deux autres formes de réalisation de bande de matière 120, 130 en boucle dans lesquelles les zones de jonction 3, 30 sont concentrées dans un seul brin.

La figure 9 illustre une première forme de réalisation d'un ruban plat 2 pour former la bande de matière 120 en boucle illustrée à la figure 10 comportant deux zones de jonction 30, réalisées par exemple selon la variante illustrée aux figures 3 à 5 ou selon toute autre variante équivalente telle que celle illustrée aux figures 1 et 2, décalées latéralement et s'étendant chacune sur une largeur inférieure à la moitié de la largeur du ruban plat 2. Ainsi en assemblant les extrémités du ruban plat 2 pour former la bande de matière 120, les deux zones de jonction 30 sont alignées dans la largeur de ladite bande, disposées de part et d'autre de l'axe médian A du ruban plat 2, et délimitent entre elles une portion 9 médiane continue, sans jonction, offrant les mêmes avantages en terme de résistance que les exemples précédents.

La figure 11 illustre une seconde forme de réalisation d'un ruban plat 2 pour former la bande de matière 130 en boucle illustrée à la figure 12 comportant trois zones de jonction 30, réalisées par exemple selon la variante illustrée aux figures 3 à 5 ou toute autre variante équivalente telle que celle illustrée aux figures 1 et 2, décalées latéralement, disposées en chevron et s'étendant sur une largeur inférieure au tiers de la largeur du ruban plat 2. Ainsi en assemblant les extrémités du ruban plat 2 pour former la bande de matière 130, les trois zones de jonction 30 sont alignées dans la largeur de ladite bande, disposées symétriquement à l'axe médian A du ruban plat 2, et délimitent entre elles deux portions 9 intermédiaires continues, sans jonction, offrant les mêmes avantages en terme de résistance que les exemples précédents. Cette construction symétrique permet par ailleurs l'équilibrage des efforts dans la bande matière 130 obtenue, de fait particulièrement adaptée à des installations à grande vitesse ou à forte puissance.

### Possibilités d'application industrielle :

Il ressort clairement de cette description que l'invention permet d'atteindre les buts fixés, à savoir proposer une bande de matière en boucle 100, 110, 120, 130 assemblable grâce à ses zones de jonction 3, 30, offrant une résistance mécanique et une durée de vie en fatigue optimisées, permettant ainsi de rivaliser en termes de résistance mécanique avec n'importe quelle autre courroie sans jonction, pouvant faire office aussi bien de courroie de transmission de puissance que de bande transporteuse, et pouvant également s'appliquer à toutes les matières et structures connues et à venir. Les performances mécaniques obtenues étant telles qu'il est possible dans certains cas de réduire la largeur des bandes d'origine.

Par ailleurs, les zones de jonction 3, 30 de la bande transporteuse selon l'invention présentent avantageusement des caractéristiques telles que leur fabrication peut être réalisée avec une grande précision tout en ménageant l'outillage utilisé et ralentissant son usure.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Bande de matière en boucle (100, 110, 120, 130), telle que notamment une courroie de transmission de puissance, une bande transporteuse, un convoyeur ou similaire, comportant au moins un ruban plat (2) présentant au moins une zone de jonction réversible (3, 30) permettant le montage et le démontage de ladite bande de matière en boucle, ladite zone de jonction réversible (3, 30) comportant au moins deux dentelures emboîtables (3a, 3b, 30a, 30b) de formes complémentaires prévues chacune dans le plan d'une extrémité dudit ruban plat (2), lesdites dentelures (3a, 3b, 30a, 30b) comportant chacune au moins une dent (4, 40) délimitée par un pourtour, comportant au moins deux zones de jonction (3, 30) dans lesquelles lesdites dentelures (3a, 3b, 30a, 30b) s'étendent sur une partie seulement de sa largeur de sorte que, lorsque ladite bande de matière est assemblée en boucle autour de deux poulies (10a, 10b), les brins de ladite bande de matière qui s'étendent respectivement entre les deux poulies sont continus et sans jonction sur au moins une portion (9) de leur largeur quelque soit la position en rotation de ladite bande de matière en boucle. **caractérisée en ce que** lesdites dentelures sont agencées pour être traversées, après leur emboîtement, par au moins une tige transversale amovible (22) permettant de verrouiller et de déverrouiller ladite zone de jonction (3, 30, 31, 300).

2. Bande de matière selon la revendication 1, **caractérisée en ce que** les dentelures (3a, 30a) d'une première zone de jonction (3, 30) sont décalées latéralement et longitudinalement par rapport aux dentelures (3b, 30b) de la seconde zone de jonction (3, 30) de sorte que, lorsque ladite bande de matière est assemblée en boucle, lesdites première et seconde zones de jonction (3, 30) sont diamétralement opposées.

3. Bande de matière selon la revendication 2, **caractérisée en ce qu'**elle comporte un ruban plat (2) pourvu desdites première et seconde zones de jonction (3, 30) qui s'étendent chacune sur une partie de la largeur dudit ruban plat.

4. Bande de matière selon la revendication 2, **caractérisée en ce qu'**elle comporte un premier ruban plat (2) pourvu de ladite première zone de jonction (3, 30) et un second ruban plat (2) pourvu de ladite deuxième zone de jonction (3, 30), lesdits premier et second rubans plats (2) étant disposés côte à côte et de manière telle, l'un par rapport à l'autre, que lorsque lesdites extrémités desdits premier et second rubans plats (2) sont assemblées, lesdites première et seconde zones de jonction (3, 30) sont diamétralement opposées.

5. Bande de matière selon la revendication 1, **caractérisée en ce qu'**elle comporte un ruban plat (2) pourvu de- deux zones de jonction (3, 30) qui s'étendent chacune sur une largeur inférieure à la moitié de la largeur dudit ruban plat, les dentelures (3a, 30a) d'une première zone de jonction (3, 30) étant décalées latéralement par rapport aux dentelures (3b, 30b) de la seconde zone de jonction (3, 30) de sorte que, lorsque ladite bande de matière est assemblée en boucle, lesdites première et seconde zones de jonction (3, 30) sont alignées dans la largeur de ladite bande de matière et délimitent entre elles une portion (9) centrale continue et sans jonction.

6. Bande de matière selon la revendication 1, **caractérisée en ce qu'**elle comporte un ruban plat (2) pourvu de trois zones de jonction (3, 30) s'étendant chacune sur une largeur inférieure au tiers de la largeur dudit ruban plat, les dentelures (3a, 3b, 30a, 30b) desdites zones de jonction (3, 30) étant décalées latéralement et disposées en chevron de sorte que, lorsque ladite bande de matière est assemblée en boucle, les trois zones de jonction (3, 30) sont alignées dans la largeur de ladite bande de matière, sont symétriques par rapport à l'axe médian (A) dudit ruban plat et délimitent entre elles deux portions (9) intermédiaires continues et sans jonction.

7. Bande de matière selon l'une quelconque des revendications précédentes, **caractérisée en ce que** les dentelures (3a, 3b, 30a, 30b) desdites zones de jonction (3, 30) comportent au moins une dent (4, 40), ladite dent (4, 40) étant délimitée par un pourtour (4', 40') de forme asymétrique par rapport à l'axe longitudinal (B) de ladite dent (4,40) parallèle à l'axe médian (A) dudit ruban plat (2).

8. Bande de matière selon la revendication 7, **caractérisée en ce que** ledit pourtour (4', 40') comporte au moins une portion de droite (6) sensiblement parallèle aux bords longitudinaux (23) dudit ruban plat (2).

9. Bande de matière selon l'une quelconque des revendications 7 ou 8, **caractérisée en ce que** ladite dent (4) présente sensiblement une forme de triangle rectangle dont le sommet (5) est arrondi.

10. Bande de matière selon l'une quelconque des revendications 7 à 9, **caractérisée en ce que** ledit pourtour (4', 40') de ladite dent (4, 40) comporte au moins un épaulement (8) dont les angles sont arrondis.

11. Bande de matière selon l'une quelconque des revendications 7 à 10, dans laquelle les dentelures (3a, 3b, 30a, 30b) desdites zones de jonction (3, 30) comportent plusieurs dents (4, 40), **caractérisée en ce que** lesdites dents (4, 40) sont alignées et sont de longueur égale.

## Patentansprüche

1. Bandschleifenmaterial (100, 110, 120, 130), wie insbesondere ein Kraftübertragungsriemen, ein Förderband, ein Förderer oder ähnlich, mit zumindest einem Flachband (2), das zumindest einen reversiblen Verbindungsbereich (3, 30) aufweist, der den Ein- und den Ausbau des besagten Bandschleifenmaterials erlaubt, wobei besagter reversible Verbindungsbereich (3, 30) zumindest zwei ineinanderfügbare Verzahnungen (3a, 3b, 30a, 30b) mit komplementären Formen beträgt, die jeweils in der Ebene eines Endes des besagten Flachbands (2) vorgesehen sind, wobei besagte Verzahnungen (3a, 3b, 30a, 30b) jeweils zumindest einen Zahn (4, 40) betragen, der durch einen äußeren Umfang begrenzt ist, der zumindest zwei Verbindungsbereiche (3, 30) beträgt, in denen besagte Verzahnungen (3a, 3b, 30a, 30b) sich nur auf einem Teil seiner Breite erstrecken so dass, wenn besagtes Bandmaterial um zwei Scheiben (10a, 10b) in eine Schleife zusammengefügt wird, die sich jeweils zwischen den beiden Scheiben erstreckenden Trume von besagtem Bandmaterial bei jeder Drehstellung von besagtem Bandmaterial auf zumindest einem Teil (9) ihrer Breite durchgehend sind und keine Verbindung aufweisen, **dadurch gekennzeichnet, dass** besagte Verzahnungen ausgelegt sind, um nach ihrem Zusammenfügen von zumindest einem herausnehmbaren Querstift (22) durchquert zu werden, der erlaubt, besagten Verbindungsbereich (3, 30, 31, 300) zu verriegeln und zu entriegeln.

2. Bandmaterial nach Anspruch 1, **dadurch gekennzeichnet, dass** die Verzahnungen (3a, 30a) eines ersten Verbindungsbereichs (3, 30) seitlich und in Längsrichtung in Bezug auf die Verzahnungen (3b, 30b) des zweiten Verbindungsbereichs (3, 30) versetzt sind, so dass, wenn besagtes Bandmaterial in eine Schleife zusammengefügt wird, besagter erster und besagter zweiter Verbindungsbereich (3, 30) diametral entgegengesetzt sind.

3. Bandmaterial nach Anspruch 2, **dadurch gekennzeichnet, dass** es ein Flachband (2) beträgt, das mit besagtem ersten und besagtem zweiten Verbindungsbereich (3, 30) versehen ist, die sich jeweils über ein Teil der Breite von besagtem Flachband erstrecken.

4. Bandmaterial nach Anspruch 2, **dadurch gekennzeichnet, dass** es ein erstes Flachband (2) beträgt, das mit besagtem ersten Verbindungsbereich (3, 30) versehen ist, und ein zweites Flachband (2), das mit besagtem zweiten Verbindungsbereich (3, 30) versehen ist, wobei besagtes erstes und besagtes zweites Flachband (2) Seite an Seite zueinander angeordnet sind, so dass, wenn besagte Enden von besagtem ersten und von besagtem zweiten Flachband (2) zusammengefügt sind, besagter erster und besagter zweiter Verbindungsbereich (3, 30) diametral entgegengesetzt sind.

5. Bandmaterial nach Anspruch 1, **dadurch gekennzeichnet, dass** es ein Flachband (2) beträgt, das mit zwei Verbindungsbereichen (3, 30) versehen ist, die sich jeweils auf einer Breite erstrecken, die kleiner als die halbe Breite von besagtem Flachband ist, wobei die Verzahnungen (3a, 30a) eines ersten Verbindungsbereichs (3, 30) seitlich in Bezug auf die Verzahnungen (3b, 30b) des zweiten Verbindungsbereichs (3, 30) versetzt sind, so dass, wenn besagtes Bandmaterial in eine Schleife zusammengefügt wird, besagter erster und besagter zweiter Verbindungsbereich (3, 30) in der Breite von besagtem Bandmaterial ausgerichtet sind und zwischen sich ein durchgängiges Mittelteil (9) ohne Verbindung bilden.

6. Bandmaterial nach Anspruch 1, **dadurch gekennzeichnet, dass** es ein Flachband (2) beträgt, das mit drei Verbindungsbereichen (3, 30) versehen ist, die sich jeweils auf einer Breite erstrecken, die kleiner als ein Drittel der Breite des besagten Flachbands ist, wobei die Verzahnungen (3a, 3b, 30a, 30b) der besagten Verbindungsbereiche (3, 30) seitlich versetzt und in Form einer Spitze angeordnet sind, so dass, wenn besagtes Bandmaterial in eine Schleife zusammengefügt wird, die drei Verbindungsbereiche (3, 30) in der Breite von besagtem Bandmaterial ausgerichtet sind, in Bezug auf die Mittelachse (A) von besagtem Flachband symmetrisch sind und zwischen sich zwei durchgängige Zwischenteile (9) ohne Verbindung bilden.

7. Bandmaterial nach einem beliebigen der vorhergehenden Ansprüchen, **dadurch gekennzeichnet, dass** die Verzahnungen (3a, 3b, 30a, 30b) von besagten Verbindungsbereichen (3, 30) zumindest einen Zahn (4, 40) betragen, wobei besagter Zahn (4, 40) von einem äußeren Umfang (4', 40') begrenzt ist, der in Bezug auf Längsachse (B) von besagten Zahn (4, 40), die parallel zu Mittelachse (A) von besagtem Flachband (2) verläuft, eine asymmetrische Form aufweist.

8. Bandmaterial nach Anspruch 7, **dadurch gekennzeichnet, dass** besagter äußerer Umfang (4', 40') zumindest einen geraden Abschnitt (6) beträgt, der merklich parallel zu den Längsrändern (23) von besagtem Flachband (2) verläuft.

9. Bandmaterial nach einem beliebigen der Ansprüche 7 oder 8, **dadurch gekennzeichnet, dass** besagter Zahn (4) merklich die Form eines rechtwinkligen Dreiecks mit abgerundeter Spitze (5) aufweist.

10. Bandmaterial nach einem beliebigen der Ansprüche 7 bis 9, **dadurch gekennzeichnet, dass** besagter äußerer Umfang (4', 40') von besagtem Zahn (4, 40) zumindest einen Absatz (8) mit abgerundeten Ecken aufweist.

11. Bandmaterial nach einem beliebigen der Ansprüche 7 bis 10, bei dem die Verzahnungen (3a, 3b, 30a, 30b) von besagten Verbindungsbereichen (3, 30) mehrere Zähne (4, 40) betragen, **dadurch gekennzeichnet, dass** besagte Zähne (4, 40) ausgerichtet sind und die selbe Länge aufweisen.

## Claims

1. Looped material band (100, 110, 120, 130) such as in particular a power transmission belt, a conveyor belt, un conveyor or similar, including at least one flat strip (2) having at least one reversible splice area (3, 30) allowing assembling and disassembling said looped material band, said reversible splice area (3, 30) comprising at least two serrations (3a, 3b, 30a, 30b) with complementary shapes that can be engaged together, provided each in the plane of an end of said flat strip (2), said serrations (3a, 3b, 30a, 30b) comprising each at least one tooth (4, 40) delimited by a perimeter, comprising at least two splice areas (3, 30) in which said serrations (3a, 3b, 30a, 30b) extend on a part only of its width so that, when said material band is assembled in a loop around two pulleys (10a, 10b), the strands of said material band, which extend respectively between the two pulleys, are continuous and without splice on at least a portion (9) of their width, whatever the position in rotation of said looped material band, **characterized in that** said serrations (3a, 3b, 30a, 30b) are arranged in order to be crossed, after engaging them, by at least one removable transversal connecting pin (22) that allows locking and unlocking said splice area (3, 30, 31, 300).

2. Material band according to claim 1, **characterized in that** the serrations (3a, 30a) of a first splice area (3, 30) are offset laterally and longitudinally with respect to the serrations (3b, 30b) of the second splice area (3, 30) so that, when said material band is assembled in a loop, said first and second splice areas (3, 30) are diametrically opposite.

3. Material band according to claim 2, **characterized in that** it comprises a flat strip (2) provided with said first and second splice areas (3, 30), which extend each over a part of the width of said flat strip.

4. Material band according to claim 2, **characterized in that** it comprises a first flat strip (2) provided with said first splice area (3, 30) and a second flat strip (2) provided with said second splice area (3, 30), said first and second flat strips (2) being arranged side by side and in such a way with respect to each other that, when said ends of said first and second flat strips (2) are assembled, said first and second splice areas (3, 30) are diametrically opposite.

5. Material band according to claim 1, **characterized in that** it comprises a flat strip (2) provided with two splice areas (3, 30) that extend each over a width smaller than half the width of said flat strip, the serrations (3a, 30a) of a first splice area (3, 30) being offset laterally with respect to the serrations (3b, 30b) of the second splice area (3, 30) so that, when said material band is assembled in a loop, said first and second splice areas (3, 30) are aligned in the width of said material band and delimit between them a central portion (9) that is continuous and without splice.

6. Material band according to claim 1, **characterized in that** it comprises a flat strip (2) provided with three splice areas (3, 30) that extend each over a width smaller than the third of the width of said flat strip, the serrations (3a, 3b, 30a, 30b) of said splice areas (3, 30) being offset laterally and aligned in a chevron arrangement so that, when said material band is assembled in a loop, the three splice areas (3, 30) are aligned in the width of said material band, are symmetrical with respect to the centerline (A) of said flat strip and delimit between them two intermediate portions (9) that are continuous and without splice.

7. Material band according to any of the previous claims, **characterized in that** the serrations (3a, 3b, 30a, 30b) of said splice areas (3, 30) comprise at least one tooth (4, 40), said tooth (4, 40) being delimited by a perimeter (4', 40') with an asymmetric shape with respect to the longitudinal axis (B) of said tooth (4, 40) parallel to the centerline (A) of said flat strip (2).

8. Material band according to claim 7, **characterized in that** said periphery (4', 40') comprises at least one straight line portion (6) that is substantially parallel to the longitudinal edges (23) of said flat strip (2).

9. Material band according to any of claims 7 or 8, **characterized in that** said tooth (4) has substantially the shape of a rectangular triangle whose top (5) is rounded.

10. Material band according to any of claims 7 to 9, **characterized in that** said periphery (4', 40') of said tooth (4, 40) comprises at least one shoulder (8) with rounded angles.

11. Material band according to any of claims 7 to 10, in which the serrations (3a, 3b, 30a, 30b) of said splice areas (3, 30) comprise several teeth (4, 40), **characterized in that** said teeth (4, 40) are aligned and have equal lengths.
